# EUROPEAN PATENT APPLICATION

(11) **EP 2 703 450 A1**
(43) Date of publication of application: **05.03.2014**
(21) Application number: 12182933.7
(22) Date of filing: 04.09.2012
(51) Int. Cl.: C09C 1/42, C09C 3/00, C09C 3/04, C09C 3/08, C09C 3/10, C08K 9/04

(54) **Advanced multistep process for obtaining modified inorganic particles**

(71) Applicant: Borealis Agrolinz Melamine GmbH, 4021 Linz (AT)
(72) Inventor: Dr. Dicke, René, 4060 Leonding (AT); Rot, Katarina, 4060 Leonding (AT)
(74) Representative: Morawski, Birgit

(57) **Abstract**

The present invention relates to a process for obtaining modified inorganic particles having a layered structure comprising the steps of a1) Providing an organic and/or aqueous solution or suspension comprising at least one first amino compound in a first vessel T1 and protonating the at least one first amino compound by using at least one acid; b) Providing a homogenous suspension comprising at least one inorganic particle having a layered structure in an organic or a mixture of water and at least one organic solvent in a second vessel T2; c1) addition of the solution or suspension of the at least one first protonated amino compound from the first vessel T1 to the homogenous suspension comprising at least one inorganic particle having a layered structure in the second vessel T2; and d) removal and work up of the modified inorganic particles.

## Description

The present invention relates to a process for obtaining modified inorganic particles according to the preamble of claim 1 and modified inorganic particles according to claims 12-14 and their use according to claim 15.

### Description

Inorganic particles having a layered structure and being modified are known.

For instance, Hayashi et al. (Solid state sciences, 2009, 11: 1007-1015) describes the intercalation of melamine into layered zirconium phosphates and the ability of these modified particles to adsorb formaldehyde in gas and solution phase.

In WO 2002/048248 A1 inorganic particles having a layered structure are described, which were modified by using different amino compounds such as melamine, urea or guanidine for cation exchange and as intercalating agent.

These modified inorganic particles can be applied as aldehyde scavenger, in particular a formaldehyde scavenger, and/or at the same time as curing agent for aldehyde based resins, respectively glues or adhesives for manufacturing of wood based panels having an improved performance as described in WO 2011/110536 A1.

According to the teaching of WO 2002/048248 A1 the modified inorganic particles having a layered structure are synthesized in lab scale in a one pot synthesis. All raw materials such as amino compound, inorganic particle, and acid are put together in one vessel followed by an aldehyde which is added to the mixture. One disadvantage of such a one pot approach is an insufficient swelling time of the layered particles. A further disadvantage is that the viscosity of the mixture cannot be sufficiently controlled. However, an uncontrolled viscosity increase is a major problem for carrying out the reaction in a technical larger scale specifically in a stirring vessel. In addition the solid content is limited due to the problem of viscosity. A further disadvantage of a one-pot synthesis is that the addition of the free acid to the mixture comprising the inorganic layered particles such as layered silicate particles like Montmorillonite also causes an ion exchange of sodium against hydrogen within the silicate particle. Such a hydrogen containing layered silicate is however not stable and may transform into other silicate types.

The disadvantages of the above one-pot synthesis in particular in respect to carrying out the modifying reaction in a larger technical scale could be solved by a two-step process as described in the pending European patent application 12168254.6. Here a multistep process is described wherein the protonation of an amino compound and the swelling of the inorganic particles in water are carried out in two separate vessels the content thereof being subsequently mixed. In a further step the aldehyde is added to the suspension of the inorganic particles and protonated amino compound. This two-step process has the advantage that the viscosity increase in the second vessel can be controlled thus enabling a suitable scale up of the reaction.

However, the above two pot synthesis process is hampered by the limitation of the inorganic particles content in the second vessel before modification to a maximum of about 7.5 mass% due to viscosity problems which still prevail. For instance the viscosity of the aqueous inorganic particles suspension is usually above 6000 mPas/75°C and due to the use of water rather wet product particles are obtained in the end requiring high costs for drying.

It is therefore an object of the present invention to provide an improved process which allows for the synthesis of modified inorganic particles in a large scale, wherein the viscosity of the reaction mixture is even further reduced, what provides for an easier handling, shorter transfer times and reduced batch time. This results in an increase of the overall yield and the overall process costs are further reduced.

This object is being solved by providing an advanced multistep process having the features according to claim 1.

Accordingly, a multistep process for obtaining modified inorganic particles having a layered structure is provided, wherein the inorganic particles are modified in particular by cation exchange and intercalation. The multistep process comprises the steps of
a1) Providing an organic and/or aqueous solution or suspension or a mixture of organic and aqueous suspension comprising at least one first amino compound in a first vessel and protonating the at least one first amino compound by using at least one acid;
b) Providing a homogenous suspension comprising at least one inorganic particle having a layered structure in at least one organic solvent or in a mixture of water and at least one organic solvent in a second vessel;
c1) addition of the solution or suspension of the at least one first protonated amino compound from the first vessel to the homogenous suspension comprising at least one inorganic particle having a layered structure in the second vessel; and
d) removal and work up of the modified inorganic particles.

The present multistep process uses an organic solvent or a water/organic solvent mixture for providing the suspension of inorganic particles in the second vessel in process step b). Thus, the solvent used for suspending the inorganic particles in the second vessel is changed from water to an organic solvent or a mixture of water and an organic solvent, in which an excess of organic solvent is preferred. At least a small amount of water is useful for a better swelling of the inorganic particles in order to increase the layer distance. The use of an organic solvent or water/organic solvent mixture for suspending the inorganic particles has different advantages which will become apparent when describing the process in the following in more detail.

The present process according to the invention provides layered inorganic particles, which underwent a cation replacement between the particle layers wherein the native cations such as Na⁺ are replaced by the protonated first amino compound.

In a first embodiment of the present process at least one aldehyde is added in an additional step c3) to the homogenous suspension of the at least one inorganic particle and the first protonated amino compound in the second vessel T2, i.e. the process of this embodiment comprises the steps a1), b), c1), c3), d). Here an aldehyde is added to the mixture of protonated first amino compound and inorganic particles. The particles obtained in this first embodiment can be described as comprising a first protonated amino compound within the particle layers and a thin polymer coat of an amino-aldehyde-condensate as described further below in more detail.

In a further second embodiment of the present process at least one second non-protonated amino compound is added to the suspension obtained in step c1) in an additional step c2). In this embodiment process step c3) is omitted, i.e. no aldehyde is added, i.e. the process of the second embodiment comprises the steps a1), b), c1), c2), d). Thus, the multistep process according to this second embodiment comprises the steps of providing a protonated, and thus positively charged first amino compound in one first vessel; providing swollen inorganic particles in an organic solvent or a water/organic solvent mixture in a separate second vessel; mixing the protonated first amino compound and the swollen inorganic particle; adding a second non-protonated amino compound to the mixture of protonated first amino compound and swollen inorganic particles; followed by a suitable work up of the thus obtained modified particles.

In a further third embodiment of the present process at least one second non-protonated amino compound is added to the solution or suspension obtained in step a1) in the first vessel in an additional step a2). It is also conceivable that steps a1) and a2) are combined and carried out simultaneously at the same time. Subsequently, the aqueous solution or suspension from the first vessel comprising the first protonated amino compound and the second non-protonated compound obtained in step a2) is added to the homogeneous organic solvent or water/organic solvent suspension comprising at least one inorganic particle in the second vessel in step c1). Here also the additional process step c3) is omitted, i.e. no aldehyde is added in this embodiment. The third embodiment comprises thus the steps a1), a2), c1), d).

The multistep process according to the third embodiment comprises thus the steps of providing a protonated, and thus positively charged first amino compound in one first vessel; adding a second non-protonated amino compound to the protonated first amino compound; providing swollen inorganic particles in an organic solvent or a water/organic solvent mixture in a separate second vessel; mixing the protonated first amino compound and the second non-protonated amino compound with the swollen inorganic particle followed by a suitable work up of the thus obtained modified particles.

The second and third embodiments as just described provide inorganic particles, which comprise within the layers of the particles a first protonated amino compound and further a second non-protonated amino compound (see also below).

Finally, in a fourth and a fifth embodiment the process comprises the steps a1), b), c1), c2), c3), d) and in a fifth embodiment the steps a1), a2), b), c1), c3), d).

In the fourth and fifth embodiment of the present process at least one aldehyde is added in an additional step c3) to the homogenous suspension of the at least one inorganic particle and the first protonated amino compound in the second vessel T2. Thus, an aldehyde is added to the mixture of protonated first amino compound, non-protonated second amino compound and inorganic particles. The particles obtained in this fourth or fifth embodiment can be described as comprising a first protonated amino compound and a second non-protonated compound within the particle layers and a thin polymer coat of an amino-aldehyde-condensate as described in the following in more detail.

When the first protonated amino compound is mixed with the swollen inorganic particles, cation exchange is promoted within the layered inorganic particles. The layered inorganic particles such as silicates contain usually cations such as Na⁺ cations. These exchangeable cations are replaced by the cations of the first amino compound in the course of the process in step c1) e.g. the native cations are replaced by cations of first amino compound, as depicted in the following reaction scheme I as an example.

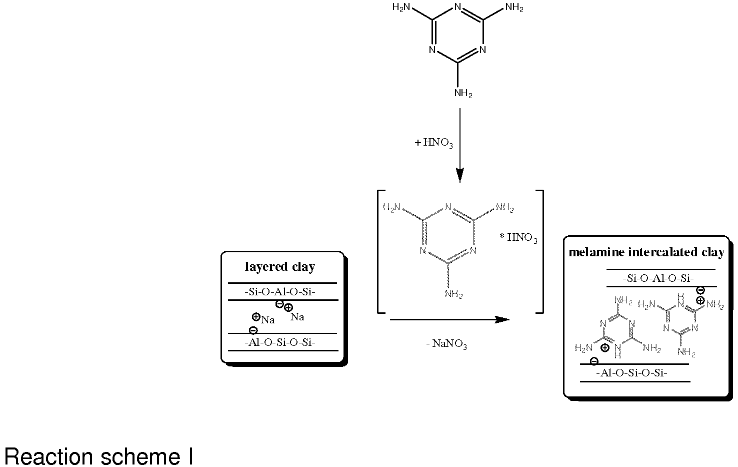

When adding a second non-protonated amino compound in step c2) for instance according to the second embodiment to the mixture of protonated first amino compound and inorganic particles the second uncharged non-protonated amino compound is intercalated between the layers of the inorganic particles, which have already been widened by the cation exchange using the first charged amino compound, as shown in above scheme I.

The same mechanism takes place in the further third embodiment described above wherein the non-protonated second amino compound, which is already present in the mixture, is intercalated between the layers of the inorganic particles which have been widened by the first protonated amino compound.

The second amino compound can be either the same as the first amino compound or can be different from the first amino compound. In any case, the second amino compound is preferably selected from the same class of compounds as the first amino compound described further below. It is further conceivable to use different amino compounds as second amino compound. For instance two or more different non-protonated amino compounds may be used as second amino compound.

By adding at least one aldehyde to the mixture of first protonated amino compound, second non-protonated amino compound and swollen inorganic particles in step c3) such as according to the fourth or fifth embodiment the aldehyde reacts with any of the first and second amino compound in a condensation reaction providing an amino-aldehyde-condensate such as amino-aldehyde-oligomer or polymer.

The aldehyde is preferably added in a slow, controlled manner to the reaction mixture, e.g. in a time period of at least 30 min and up to over an hour. This slow, controlled aldehyde addition allows a complete reaction of the aldehyde with any one of the amino compounds in particular on the surface and the outer area of the layers of the inorganic particles. The amino compounds within the core of the inorganic particles only react with the aldehyde to a smaller extent since said amino compounds are more difficult to be accessed by the aldehyde such as formaldehyde.

As mentioned, due to the complete reaction in particular on the particle surface the corresponding amino-aldehyde-condensate is preferably formed on the outer edges of the layers of the inorganic particles, but preferably not further inside in the core of the layers. This is due to the fact that the aldehyde reacts very fast with the amino compound at a specific pH level in the process and forms immediately amino-aldehyde-condensate due to the slow and controlled addition of the aldehyde to the reaction mixture.

This in turn also means that in particular a mixture of first protonated amino compound, the anion of the acid used in step a1) for protonating the first amino compound as well as second non-protonated amino compound are located within the inorganic particles.

The modified inorganic particles obtainable by the process according to the fourth or fifth embodiment, i.e. a process comprising steps a1), b), c1), c2), c3) d) or the steps a1), a2), b), c1), c3), d) comprise thus preferably protonated amino compounds with the respective acid anion as counter ion and non-protonated amino compounds in the particle core and a mixture of amino-aldehyde-condensate and silicate as an outer coat as measured by XRD techniques. Preferably no outer shell of only amino-aldehyde-condensate is formed.

Besides these compounds the salt of exchanged cations of the layered inorganic particles such as alkali and alkaline earth cations etc. and acid anions used for protonating the first amino compound may also be present within the modified particle layers or within the condensate coating of the particles, in particular if a washing step is avoided during the particle work up.

By applying a method according to the fourth or fifth embodiment and by omitting a washing step during the work up step d) even further modified inorganic particles of the following composition are obtained:
- a salt comprising native cations such as alkali metal, alkaline earth metal, aluminium, iron and/or manganese cations of the layered inorganic particles and anions of the acid used in step a) for protonating the first amino compound such as nitrate or others;
- protonated first amino compound which in particular serves as counter cation for the free anions of the layered inorganic particles, i.e. a salt of protonated first amino compound and anions of layered particle;
- a salt comprising protonated first amino compound as cation and anions of the acid used in step a) for protonating the first amino compound such as nitrate or others;
- intercalated non-protonated second amino compound, and
- polymer coat of amino - aldehyde condensate.

The thickness of the outer condensate such as a polymer coat may be controlled by the amount of aldehyde such as formaldehyde added and the way said aldehyde is added to the reaction mixture. For instance, by adding formaldehyde in a controlled manner formaldehyde reacts quickly with one of the amino compounds. If formaldehyde is added however in one step in an uncontrolled manner formaldehyde is able to enter the particle core.

As described above, process step a1) provides for the formation of a cation of the first amino compound by using at least one suitable acid, i.e. in particular at least one N-atom such as in case of an amino group or triazine ring is protonated and carries thus a positive charge.

In an embodiment of the present process the first amino compound is added in process step a1) to the organic and/or aqueous solution having a temperature between 30 to 100 °C, preferably 40 to 90 °C, most preferably 50 to 80 °C.

It is also preferred in the present process that during the addition of the first amino compound to the organic solvent and/or water, in process step a) a viscosity between 1 to 100 mPas/75°C, preferably 1 to 80 mPas/75°C, most preferably 1 to 30 mPas/75°C is obtained.

The concentration of the first amino compound in the organic and/or aqueous solution varies and depends on the amino compound used, in particular on the solubility of the amino compound. In case of a suspension, for example when using melamine, the suspension can be obtained with a melamine content of 5-10 mass%, preferably 8 mass% due to the relatively low solubility of melamine. If on the other hand a more soluble amino compound such as urea is being used a much higher concentration of the first amino compound in the solution is possible such as 15 mass% and higher.

In a further variant of the present process, in particular of process step a1) the acid is added within a time range between 2 to 10 min, preferably 3 to 8 min, most preferably 4 to 7 min.

By adding an acid the pH value in the first vessel is adjusted to a range of 0 to 8. It has to be noted that the pH value obtained in the first vessel depends strongly on the amino compound used e.g. from the number of N-atoms like amino groups within this compound and also from the type and amount of acid used.

It is for instance preferred if the first amino compound and the acid are used in a molar ratio of 1:1.

The suspension/solution of the protonated first amino compound is further stirred for a time period of 20 to 40 min, preferably 30 min.

The main reaction in the first vessel in step a1) is the neutralisation of the first amino compound by a suitable acid and formation of the corresponding salt of the first amino compound. This neutralisation reaction is accompanied by the formation of complexes of the first protonated amino compound and the corresponding acid anion, e.g. [amino compound H]⁺ [acid anion]⁻.

Suitable first amino compounds may be polyfunctional C₁-C₃₀ amino compounds of the type consisting of heterocyclic compounds, triazines such as melamine, triazine derivatives such as benzoguanamine, acetoguanamine, urea, urea derivatives, cyanamide, dicyandiamide, sulphonamides, guanidine, guanidine derivatives, aliphatic linear or branched amines and/or aromatic amines such as aniline.

The triazine derivatives optionally used as first amino compound are preferably melamines, diaminomethyltriazines and/or diaminophenyltriazines substituted by hydroxy-C₁-C₁₀-alkyl groups, hydroxy-C₁-C₁₀-alkyl(oxa-C₂-C₄-alkyl)₁₋₅ groups and/or by amino-C₁-C₁₂-alkyl groups, preferably 2-(2-hydroxyethylamino)-4,6-diamino-1,3,5-triazine, 2-(5-hydroxy-3-oxapentylamino)-4,6-diamino-1,3,5-triazine, 2,4,6-tris(6-aminohexylamino)-1,3,5-triazine and/or 2,4-(di-5-hydroxy-3-oxapentylamino)-6-methyl-1,3,5-triazine, ammeline, ammelide, melem, melon and/or melam.

Possible urea derivatives are thiourea, biuret and urea or thiourea substituted by C₁-C₁₀-alkyl groups, C₆-C₁₄-aryl groups, hydroxy-C₁-C₁₀-alkyl groups, hydroxy-C₁-C₄-alkyl(oxa-C₂-C₄-alkyl)₁₋₅ groups and/or by amino-C₁-C₁₂-alkyl groups.

The guanidine derivatives optionally forming an interlamellar content in the modified inorganic particles are biguanides, preferably 1-(*o*-tolyl)-biguanide.

Suitable amines are for instance hydrazines, aromatic amines, aromatic diamines, aminobenzoic acid and its derivatives, 2-amino-2-methyl-1-propanol, urethanes, allylamines, imidazol and others. Suitable amino acids are for instance arginine, lysine or asparagine. Proteins containing asparagine, arginine and lysine, in particular casein, gelatin, gluten, whey protein, soy protein, collagen or amino group containing polymers like poly(vinyl)amine, 3-aminopropylvinylether, 3-aminopropylmethacrylat, 2-aminoethylmethacrylat, 4-aminobutylmethacrylat, 5-aminopentylmethacrylat, 3-aminopropylacrylat, 2-aminopropylacrylat, 4-aminobutylacrylat, 5-aminopentylacrylat, 2-aminoethylvinylether, 4-aminobutylvinylether and/or 5-aminopentylvinylether can be used. Suitable amides are amongst others for instance caprolactam, hydantoin, polyamides, nylon and derivatives thereof.

Suitable acids which can be applied in process step a1) are inorganic, organic or Lewis acids.

Suitable inorganic acids are for instance HCl, H₂SO₄, H₂SO₃, H₃PO₄, HNO₃ or HClO₄. Organic acids can be acetic acid, oxalic acid, p-toluenesulfonic acid or adipic acid. Typical Lewis acids may be AlCl₃, FeCl₃, Al(OH)₃. The use of HNO₃, H₂SO₄, H₃PO₄ is however preferred and the use of HCl may not be applicable under certain conditions and may thus be exempted.

Acids having a buffer function, such as citric acid, and/or phosphoric acid, or acidic salts having a buffer function, such as sodium hydrogen phosphate or potassium hydrogen phosphate, may also preferably be used.

In process step b) a suspension of the inorganic particles having a layered structure in an organic solvent or a water/organic solvent mixture is provided in a second vessel, thus in a vessel separate from the first vessel.

The organic solvent used in step a1) or b) is preferably selected from a group of organic solvents which are miscible or non-miscible in water, thus able to form a homogenous mixture with water. When using non-water miscible solvents it is possible to conduct the process under water free conditions.

The at least one organic solvent used in step b) may be selected from a group of organic solvents comprising lower alkanols, preferably C1-C6 alkanols, in particular preferably C2-C5 alkanols such as ethanol, n-propanol or iso-propanol, diols and oligools such as glycol, diethylenglycol, or glycerol. Typical organic solvents applied in step a1) or b) could be furthermore selected from the groups comprising ethers, e.g. tetrahydrofuran (THF) and dioxan, ketons, e.g. acetone, and dimethylformamide (DMF), dimethylsulfoxide (DMSO).

When using a water/organic solvent mixture it is preferred that the amount of the at least one organic solvent used in the water-solvent mixture of step b) in the second vessel (before addition of the first amino compound solution from the first vessel) is in a range between 50 and 99 wt%, preferably between 65 and 95 wt%, in particular preferably between 75 and 85 wt%. Thus, the at least one organic solvent is preferably used in the water-solvent mixture in excess relative to the water phase.

It is further preferred if the solid content of modified inorganic particles in the second reactor or vessel in step b) - i.e. after addition of second non-protonated amino compound and aldehyde - is between 20 and 90 wt%, preferably between 20 and 80 wt%, in particular preferably between 20 and 70 wt%. A content of modified inorganic particles above 20 wt% and up to 60 wt% is thereby mostly preferred. Thus, by using an organic solvent or a water/organic solvent mixture the content of the modified inorganic particles in the second vessel can be increased, e.g. doubled, in comparison to a process in which the modified inorganic particles are solely suspended in water.

In this context it should be pointed out that one should differentiate between the solid content of (non-modified) inorganic particles in the second reactor and the solid content of the modified inorganic particles in the second reactor. However, in both cases the amount of solid content of non-modified or modified inorganic particles can be increased, such as doubled, when using at least partially an organic solvent for suspending the inorganic particles in the second reactor vessel.

It is also preferred if the viscosity of the suspension of inorganic particles in the organic solvent or water/organic solvent mixture in the second vessel obtained in step b) is between 50 and 3000 mPas/75°C, preferably between 50 and 2500 mPas/75°C, most preferably between 50 and 2000 mPas/75°C. Thus, by using an organic solvent or water/organic solvent mixture viscosity of the inorganic particles suspension in the second vessel can be drastically reduced. For comparison the viscosity of a solely aqueous inorganic particle suspension is typically at about 6000 mPas/75°C.

It is preferred, if the organic solvent or water/organic solvent mixture used in step b) is heated to a temperature between 30 and 100°C, preferably 40 and 90°C, most preferably 60 °C and 80 °C.

The addition of inorganic particles having a layered structure to the organic solvent or water/organic solvent mixture and swelling of the inorganic particles provides a stable suspension having a pH value between 9 and 11. Depending on swelling behaviour the inorganic particles need however some time to reach a stable suspension. The stirring speed has to be controlled in such a way that the wet inorganic particle cannot dry at the reactor wall.

Suitable inorganic particles having a layer structure are, for example, silicates, phosphates, arsenates, titanates, vanadates, niobates, molybdates and/or manganates, in particular sheet silicates of the type consisting of montmorillonite, bentonite, kaolinite, muscovite, hectorite, fluorohectorite, canemite, revdite, grumantite, ilerite, saponite, beidelite, nontronite, stevensite, laponite, taneolite, vermiculite, halloysite, volkonskoite, magadite, rectorite, halloysite, kenyaite, sauconite, borofluorophlogopites and/or synthetic sheet silicates, the sheet silicates furthermore particularly preferably being sheet silicates having exchangeable cations of the type consisting of alkali metal, alkaline earth metal, aluminum, iron and/or manganese cations.

Examples of suitable phosphates having a layer structure are compounds of the formula H₂[M^{IV}(PO₄)₂].ₓH₂O (M^{IV} = Zr, Ti, Ge, SN, Pb) and CaPO₄R·H₂O (R = CH₃; C₂H₅).

Examples of suitable arsenates having a layer structure are compounds of the formula H₂[M^{IV}(AsO₄)₂].ₓH₂O and H[Mn(AsO₄)₂].ₓH₂O. Examples of suitable titanates having a layer structure are compounds of the formula Na₄Ti₈O₂₀.ₓH₂O and K₂Ln₂Ti₃O₁₀ₓH₂O.

Synthetic sheet silicates are obtained, for example, by reacting natural sheet silicates with sodium hexafluorosilicate.

Particularly preferred sheet silicates are those whose layers have an interlayer spacing of about 0.4 nm to 1.5 nm.

In process step c1) of the first embodiment the protonated first amino compound from the first vessel and the inorganic particle suspension from the second vessel are mixed for cation exchange as described previously.

It is preferred, in particular in process step c1), if the addition of the organic and/or aqueous solution/suspension containing the first protonated amino compound from the first vessel to the organic solvent or organic solvent/water homogeneous suspension of inorganic particles in the second vessel in step c1) is carried out stepwise or with a low continuous flow rate. Preferably the solution/suspension of the first amino compound is added to the second vessel containing the inorganic particles using a flow rate of 1 to 10 kg / min, preferably 2 to 8 kg / min, in particular preferably 3 to 6 kg/min.

It is preferred that the total amount of the at least one organic solvent in the second vessel after addition of the first amino compound solution/suspension from the first vessel in step c1) is in a range between 50 and 100 wt%, preferably between 50 and 80 wt%, in particular preferably between 50 and 70 wt%.

The mass or weight ratio of water to organic solvent of the water- organic solvent mixture subsequent to step c1) can also be expressed in range between 50:50 and 0:100, preferably between 50:50 and 20:80, in particular preferably between 50:50 and 30:70. Thus, the at least one organic solvent is also in step c1) preferably used in the water-solvent mixture in excess relative to the water phase.

The addition of the first protonated amino compound is carried out in a controlled manner that means that dosage, time and temperature of the addition process are chosen such that the viscosity of the obtained suspension remains moderate.

It is furthermore preferred, if the addition of the organic and/or aqueous solution/suspension containing the first protonated amino compound from the first vessel to the homogeneous suspension of inorganic particles in the second vessel in process step c1) is carried out over a time period of 5 to 30 min, preferably 10 to 20 min.

After completing the addition of the first protonated amino compound to the inorganic particle suspension and thorough mixing the viscosity of the final suspension in the second vessel is in a range between 10 and 500 mPas/75°C, preferably between 10 and 300 mPas/75°C, in particular preferably between 10 and 200 mPas/75°C. For instance, if the solid content in the vessel is 30% to 50% then the mostly preferred viscosity of the suspension is between 10 and 200 mPas/75°C.

At that point the mixture in the second vessel may be stirred for additional 30 to 120 min, preferably 40 to 90 min, most preferably 50 to 60 min.

The amount of protonated first amino compound added to the suspension of inorganic layered particles may be defined in respect to the ion exchange capacity of the inorganic particles such as layered silicate particles as MMT. In general the first protonated amino compound is added in such an amount that there is less first amino compound added than ion exchange capacity is available, i.e. even after complete addition of the first protonated amino compound not all native cations of the particle are replaced by the protonated amino compound. A complete ion exchange is only achieved by adding at least twice as much of protonated amino compound as compared to inorganic particles.

The protonated first amino compound is added in a molar ratio of 0.5 to 3, preferably in a molar ratio of 1.5 to 2.5 in respect to the ion exchange capacity of the inorganic layered particle.

In the subsequent step c2) a second non-protonated amino compound may be added to the suspension obtained in step c1).

The amount of non-protonated second amino compound added to the suspension of inorganic layered particles and first protonated amino compound may vary between 0.2 : 1 to 2 : 1 mass equivalents, preferably 0.9 : 1 to 1.1 :1 in respect to the amount of inorganic layered particles.

In process step c3) a suitable aldehyde may be added to the suspension obtained in step c1) or step c2).

In an embodiment of process step c3) the addition of the at least one aldehyde occurs over a time period of 30 to 120 min, preferably 40 to 80 min, most preferably 50 to 70 min.

In a further variant of process step c3) the reaction mixture obtained is further stirred for a time period of 60 min to 240 min, preferably 90 min to 210 min, most preferably 120 min to 180 min at a temperature between 30°C and 100°C, preferably between 40 to 90°C, most preferably between 60°C and 80°C. This allows for a completion of the condensation reaction of the aldehyde and the first and/or second amino compound.

The aldehyde solution is preferably added stepwise to the suspension of step c1) or c2) for instance over a time period of 60 min, during which the reaction of the at least one aldehyde and the first amino compound and/or second amino compound is completed as described above

The viscosity of the reaction mixture in step c3) may be between 5 to 400 mPas, preferably 10 to 300 mPas, most preferably 10 and 200 mPas at 75°C for a solid content of 30-50%.

In those variants of the present process in which a second non-protonated compound and an aldehyde is added in process step c3), the aldehyde such as formaldehyde is added to the reaction mixture in step c3) in an amount with a molar ratio of 0.2 to 0.5, preferably of 0.2 to 0.4, most preferably of 0.2 to 0.3 in respect to the number of amino groups of the second non-protonated amino compound. If dialdehydes are used half of the amount is used.

In those variants of the present process in which no second non-protonated amino compound but an aldehyde is added, the aldehyde such as formaldehyde is added in an amount of a molar ratio of about 0.1 to 0.4 in respect to the number of amino groups of the first protonated amino compound. However, the molar amount of aldehyde added is not higher than the molar ion exchange capacity of the layered silicate. This means that aldehyde such as formaldehyde is added to a maximum of a ratio of 1:1 in respect to the ion exchange capacity of the layered particles.

Suitable aldehydes used in the preparation of the modified inorganic particles are C₁-C₁₀-aldehydes, preferably formaldehyde, acetaldehyde, trimethylolacetaldehyde, acrolein, benzaldehyde, furfurol, glyoxal, glutaraldehyde, phthalaldehyde and/or terephthalaldehyde, particularly preferably formaldehyde used as aqueous formaldehyde or water free para-formaldehyde. It is also conceivable to use a mixture of above aldehydes, wherein a combination of two different aldehydes is preferred.

In the final reaction step d) the modified inorganic particles are removed from the suspension and subsequently undergo different conditioning schemes.

In an embodiment of process step d) the modified inorganic particles are filtered and dried, preferably in a combined filtration drying step, after removal from the reaction mixture.

Due to the use of the organic solvent or water-organic solvent mixture the filtration of the final product particles is improved, e.g. easier to handle, and the product particles have a reduced solvent content in comparison to a process which solely uses water as solvent.

Another advantage of using an organic solvent or water-organic solvent mixture for suspending the inorganic particles in comparison to solely water is that the solubility of the amino compounds is strongly reduced in organic solvents and thus also in a water-organic solvent mixture. This means that less amino compounds used in the process remain dissolved in the organic solvent or water-organic solvent mixture and are thus not lost in the supernatant or waste water. This means further that the waste water or supernatant obtained after filtration has a reduced amount of amino compounds.

In a most preferred embodiment of the present process the modified inorganic particles are not washed for removing excess of any of the reaction substances. Thus, in contrast to the conventional process, which include a washing step in order to remove in particular any excess of acid anions like chloride ions, the present process does not require a washing step; the washing step is omitted. The present process provides thus modified inorganic particles which still may comprise the salts of the first protonated amino compound and acid anion which in turn may have an additional impact as hardener of aldehyde based glues.

By omitting the washing process the overall process for obtaining modified inorganic particles is simplified and shortened. This in turn reduces the overall production costs for the modified inorganic particles.

If the present process is conducted in a completely water free environment, i.e. only an organic solvent is used, then in particular during the drying process of the modified final particles is simplified and reduced since an organic solvent can be usually removed easier and faster than water. The organic solvent can be easily recycled without further purification steps.

Before transferring the final suspension containing the modified inorganic particles to a suitable filtration unit the suspension has preferably to be homogenised.

The filtration unit may be a membrane filter press comprising 5 to 15 chambers, preferably 10 chambers. The suspension material can be pumped into the filtration unit using a self-priming pump. The filtration pressure may be between 0,1 to 5 bar, preferably 0,1 to 3 bar for a time period of 3 to 10 min, preferably 3 to 8 min, most preferably of 5 min.

If necessary, a subsequent dewatering of the filtration membrane in order to reactivate the membrane after usage may also be carried out for 5 min at a pressure of 3.5 bar.

It is preferred to apply multiple filtrations steps; for instance up to 8, preferably up to 5 filtrations can be carried out.

Also other filtration types are possible, for instance Rosenmund pressure filter, filter centrifuge, centrifugation or pressure strainer. The efficiency of each filtration depends on the particle formation process to form an inorganic-organic hybrid material. Conventionally the content of non-reacted inorganic material is very high, such that the filtration step may be disrupted due to the formation of an inorganic particle sheet on the filtration material.

The danger of an interrupted filtration step is however strongly reduced when using an organic solvent for suspending the inorganic particles as done in step b). This is due to the fact that the use of an organic solvent for suspending the layered inorganic particles allows a higher particle content in the suspension. Furthermore, when using an organic solvent the layered inorganic particles show a reduced swelling behaviour, which is now only controlled by the ion exchange with the first protonated amino group, and precipitate in the organic solvent.

After filtration no additional washing step of the modified inorganic particles is required as previously mentioned. The filtered suspension of modified inorganic particles has a solid content of more than about 25 wt%, preferably 40-50% and most preferably 40-80 wt% and can be simply stored in suitable containers such as simple PE bags.

The filtered suspension may be subsequently dried and grinded. Different drying methods are possible for drying the wet modified inorganic particles. The preferred method is the use of a Turbo-rotor system, which leads to a dry and also grinded product. The drying is done using hot air (Inlet temperature is 250°C and outlet 150°C). The residence time of the product in the dryer is lower than 1 sec due to the continuous mode of operation. Advantage of this specific drying method is that the grinding step can be omitted.

Other drying steps or dryers are also applicable. For example it is possible to use dryers wherein the product is arranged on movable surface like belt dryers or dryers wherein the product is moved by a suitable drying medium such as fluidised-bed dryer or conveying dryer with the temperatures as mentioned below.

Drying in a drying oven can be done by using a temperature programme starting with 100° C resulting in 70°C for final drying. The dried product has preferably to be grinded in order to achieve a uniform product quality. For the product it is generally recommended that the contact time at temperatures higher than 100°C is short.

It is further preferred if the permeate or waste solvent or solvent mixture obtained during filtration in step e) is transferred to a third vessel and optionally to a fourth vessel T4 for waste solvent workup. The waste solvent comprising a mixture of water and organic solvent undergoes preferably a distillation for separating the organic solvent phase from the water phase. After distillation the separated organic solvent may be re-used or recycled for the process, such as for providing the water-organic solvent mixture for suspending the inorganic particles in process step b).

The present multistep process for obtaining modified inorganic particles comprises a number of different technological changes in contrast to the known multistep process using solely water for suspending the inorganic particles:
- higher yield due to significantly lower viscosity by increased solid content of inorganic particles in the second vessel;
- low viscosity during the whole synthesis process;
- low energy consumption for the reaction steps;
- reduced costs for drying due to reduced amount of water of the modified inorganic particles after filtration;
- reduced waste water amounts due to recycling of the organic solvent;
- improved product quality due to reduced abrasion of the particles and reduced dust.

The present process and the different embodiments thereof allow for the synthesis of a number of different modified inorganic particles.

The process according to the invention comprising the steps a1), b), c1) and d) provides layered inorganic particles, in which the native cations such as Na⁺ are at least partially replaced by the first protonated amino compound.

Thus, the modified inorganic particles obtained by the process steps a1), b), c1) and d) comprise protonated first amino compound, a salt comprising native cations such as alkali metal, alkaline earth metal, aluminium, iron and/or manganese cations of the layered inorganic particles and anions of the acid used in step a1) for protonating the first amino compound such as nitrate or others; and a salt comprising protonated first amino compound as cation and anions of the acid used in step a1) for protonating the first amino compound such as nitrate or others.

The particles obtained in a process according to a first embodiment comprising the steps a1), b), c1), c3) and d) comprise in addition to the above inorganic particles, a thin polymer coat of an amino-aldehyde-condensate.

Thus, the modified inorganic particles obtained by the process steps a1), b), c1) c3) and d) comprise protonated first amino compound, a salt comprising native cations such as alkali metal, alkaline earth metal, aluminium, iron and/or manganese cations of the layered inorganic particles and anions of the acid used in step a1) for protonating the first amino compound such as nitrate or others, a salt comprising protonated first amino compound as cation and anions of the acid used in step a1) for protonating the first amino compound such as nitrate or others; and a thin polymer coat of an amino-aldehyde-condensate formed by the first protonated amino compound and an aldehyde.

The particles obtained in a process according to a second embodiment comprising the steps a1), b), c1), c2) and d) and in a process according to a third embodiment comprising the steps a1), a2), b), c1) and d) comprise within the layers of the particles a first protonated amino compound and further a second non-protonated amino compound.

Thus, the modified inorganic particles obtained by the process steps a1), b), c1) c2) and d) and a1), a2), b), c1) and d) comprise protonated first amino compound, a salt comprising native cations such as alkali metal, alkaline earth metal, aluminium, iron and/or manganese cations of the layered inorganic particles and anions of the acid used in step a1) for protonating the first amino compound such as nitrate or others, a salt comprising protonated first amino compound as cation and anions of the acid used in step a1) for protonating the first amino compound such as nitrate or others; and intercalated non-protonated second amino compound.

The particles obtained in a process according to a fourth embodiment comprising the steps a1), b), c1), c2), c3) and d) and in a process according to a fifth embodiment comprising the steps a1), a2), b), c1), c3) and d) comprise within the layers of the particles a first protonated amino compound, a second non-protonated amino compound and a thin polymer coat of an amino-aldehyde-condensate.

Thus, the modified inorganic particles obtained by the process steps a1), b), c1) c2), c3) and d) and a1), a2), b), c1), c3) and d) comprise protonated first amino compound, a salt comprising native cations such as alkali metal, alkaline earth metal, aluminium, iron and/or manganese cations of the layered inorganic particles and anions of the acid used in step a1) for protonating the first amino compound such as nitrate or others, a salt comprising protonated first amino compound as cation and anions of the acid used in step a1) for protonating the first amino compound such as nitrate or others; intercalated non-protonated second amino compound, and a a thin polymer coat of an amino-aldehyde-condensate formed by the first and/or second protonated amino compound and an aldehyde. The amino-aldehyde condensate may also be located in the outer part of the inorganic particles layers. The amino-aldehyde-condensate forms a kind of barrier for the interlamellar content of the inorganic particles, such that the interlamellar content, in particular the interlamellar organic content, remains or is even trapped within the inorganic particles.

In a variant the modified inorganic particles comprise an interlamellar content of at least first protonated amino compound, at least one second non-protonated amino compound and at least one anion of the acid used for protonating the first amino compound, wherein the at least one anion is selected from the group comprising nitrate, sulphate, hydrogensulphate, sulphite, phosphate, hydrogenphosphate, dihydrogenphosphate, acetate, oxalate, mono-oxalate, adipate, mono-adipate, toluene sulphonate, wherein nitrate is particularly preferred. Chloride may be thereby exempted as an anion.

In a particular preferred embodiment the modified inorganic particles comprise an interlamellar content of urea as first protonated amino compound, melamine as second non-protonated amino compound, nitrate as counterion for the protonated urea and melamine-formaldehyde-condensate and melamine-urea-formaldehyde-condensate as barrier for the interlamellar content. These preferred modified inorganic particles were obtained by using iso-propanol as solvent.

According to the above embodiments the non-protonated second amino compound such as melamine is trapped within the inorganic particles. This has the advantage that when using the modified inorganic particles in glues which are for instance used for the production of wood panels the hardening of said glue is not hampered by said amino compound such a melamine. A further advantage is that the second amino compound such as melamine can serve as aldehyde scavenger.

The particle size, mainly as agglomerats, of the present modified inorganic particles is 10 to 300 p, preferably 20 to 200 µm, most preferably 30 to 150 µm.

The enclosed salt of the first protonated amino compound and acid anion such as urea nitrate as well as the enclosed protonated first amino compound can also serve as hardener since when heating the particles such as during a pressing and curing step during the production of wood panels the enclosed salt and/or the enclosed protonated first amino compound is deprotonated and the released acid serves as hardener for the glue applied during the wood panel production. This additional effect for hardening glues gives the opportunity to reduce the amount of traditional hardener in the production of wood based panels.

The modified inorganic particles obtained in a multistep process according of the invention can be used for instance as aldehyde scavenger, as curing agent for different glues, such as formaldehyde glues like aminoplast-formaldehyde glues, in particular melamine-formaldehyde, urea-formaldehyde or melamine-urea-formaldehyde glues, or phenolformaldehyde glues, as modifier for wood based panels but also as additives for thermoplastic or thermoset compounds, in particular polyolefines, for improving their general properties.

The invention is explained in more details by the means of the following figures and examples. It shows:
- Figure 1: a reaction scheme of the present process,
- Figure 2: a reaction scheme of a further embodiment of the present process,
- Figure 3: a reaction scheme of a yet further embodiment of the present process,
- Figure 4: a reaction scheme of a yet further embodiment of the present process,
- Figure 5: a reaction scheme of a yet further embodiment of the present process,
- Figure 6: a reaction scheme of a yet further embodiment of the present process,
- Figure 7: a reaction scheme of a yet further embodiment of the present process, and
- Figure 8: a diagram showing the course of viscosity during the multistep process.

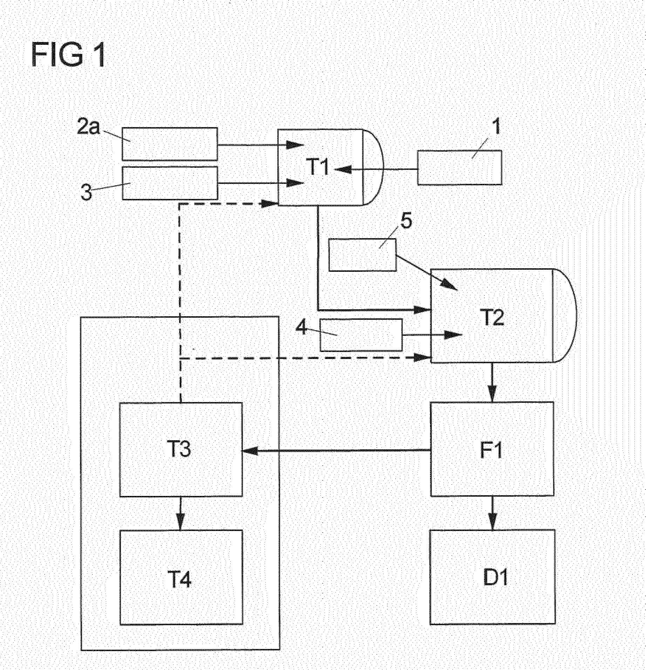

Figure 1 shows a reaction scheme for an embodiment of the present multistep process. The process is being carried out in a plant comprising a first vessel T1, a second vessel T2, a filtration unit F1, a drying unit D1, a third vessel T3 and a fourth vessel T4.

Step a1): The production process starts by loading the first vessel T1 with hot organic solvent or water 1 having preferably a temperature of about 80°C. An organic solvent and/or aqueous solution of urea as an example for a first amino compound 2a is subsequently added to the first vessel T1 followed by the controlled addition of nitric acid 3. The suspension obtained in vessel T1 is subsequently stirred for about 30 min in order to guarantee a complete protonation of urea as first amino compound 2a.

Step b): In parallel the second vessel T2 is loaded firstly with heated organic solvent 4 such as isopropanol or a heated mixture of water and isopropanol (50wt% water/ 50wt% isopropanol) 4 having a temperature of about 80°C and secondly with clay, bentonite or montmorillonite particles as exemplarily inorganic particles 5. The inorganic particle suspension is agitated for further 30 min and heated to a temperature of 80°C in order to guarantee a sufficient swelling of the inorganic particle such that the distance between the particle layers is increased.

Step c1): The suspension of vessel T1, which contains the protonated urea as first amino compound, is transferred from vessel T1 to vessel T2 in a controlled manner. In particular, the urea solution is continuously added to the inorganic particle suspension in vessel T2 within 10 min with a flow rate of 3 kg/min. By doing so the viscosity of the reaction mixture does not exceed 30 mPas/75°C. The mixture of protonated urea and inorganic particles is further agitated for 50 min in order to ensure an almost complete cation exchange of the protonated urea in the inorganic particles.

Step d): The reaction mixture of vessel T2 is subsequently transferred to filtration unit F1 wherein 12 filtration steps may be carried out. The filtered modified inorganic particles are then sent to the drying unit D1, which may be a Turbo-rotor system, which leads to a dry and also grinded product. The drying is done using hot air having an inlet temperature of 250°C and an outlet temperature of 150°C. The residence time of the product in the dryer is lower than 1 sec due to the continuous mode of operation.

Subsequent to the filtration step the permeate or waste solvent is transferred from the filtration unit F1 to the tanks T3 and T4, which serve for waste solvent regeneration. The mixture of water and isopropanol undergoes distillation for later recycle and reuse of the organic solvent isopropanol. Also the water phase may be used as so called settler. This reduces the amount of waste water, which has to be discarded, drastically.

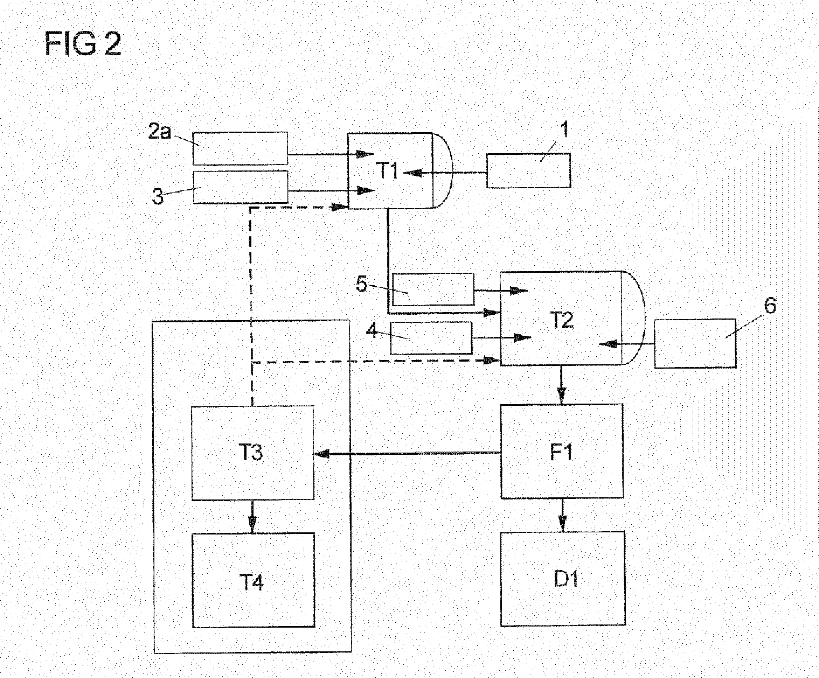

Figure 2 shows a further embodiment of the present process, which comprises an additional step c3) in respect to the process shown in Figure 1.

Step c3): Here an aldehyde 6, such as formaldehyde as preferred aldehyde is added to the mixture of inorganic particles intercalated with protonated urea as first protonoated amino compound 2a in vessel T2. The formaldehyde addition is carried out in a continuous manner over a time period of 60 min. The reaction mixture is further agitated for 120 min in order to guarantee an almost complete condensation reaction of urea and formaldehyde.

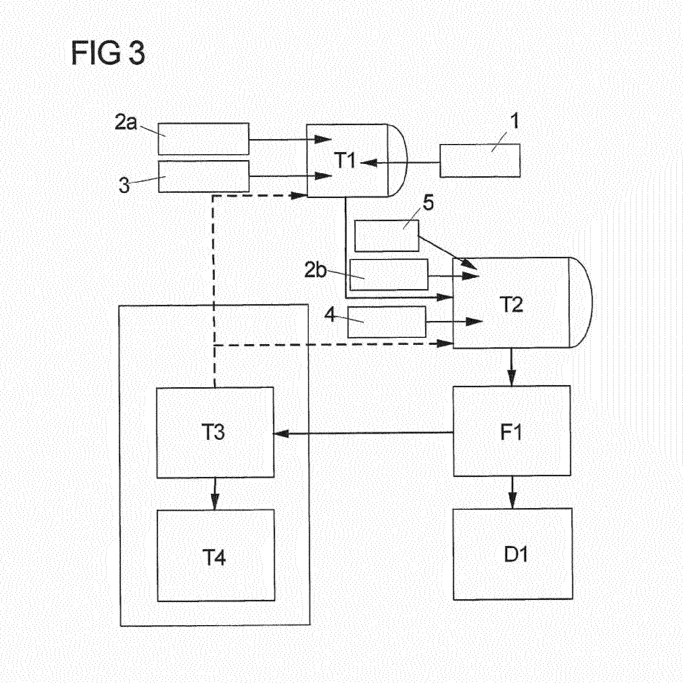

Figure 3 shows a further embodiment of the present process, which comprises an additional step c2) in respect to the process shown in Figure 1.

Step c2): Here melamine as preferred second non-protonated amino compound 2b is added to the second vessel T2 containing the mixed suspension of inorganic particles 5 and first amino compound 2a. This second amino compound 2b differs from the first amino compound 2a added to the first vessel T1 in that the second amino compound 2b is uncharged and can thus not serve for cation exchange within the layered particles 5 but is rather intercalated into the layered particles.

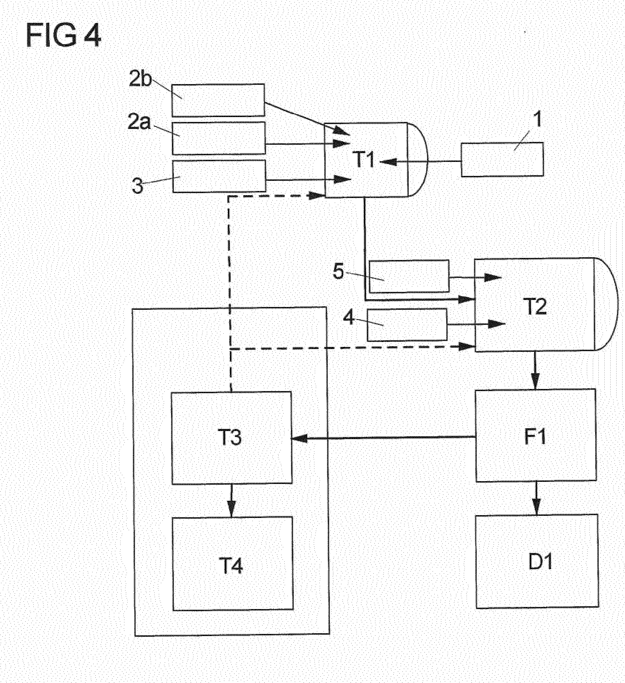

Figure 4 shows a further embodiment of the present process, which comprises an additional step a2) in respect to the process shown in Figure 1.

Step a2): In deviation from the process variants of Figure 1 and Figure 4 melamine as preferred second non-protonated amino compound 2b is added to the first protonated amino compound 2a such as melamine in vessel T1.

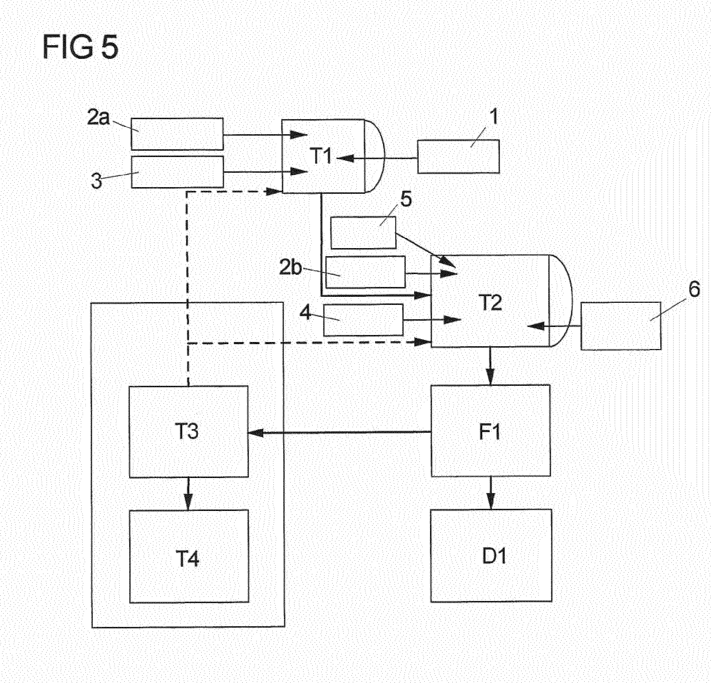

Figure 5 shows a further embodiment of the present process, which comprises the additional step c3) of adding an aldehyde 6, such as formaldehyde in respect to the process shown in Figure 3.

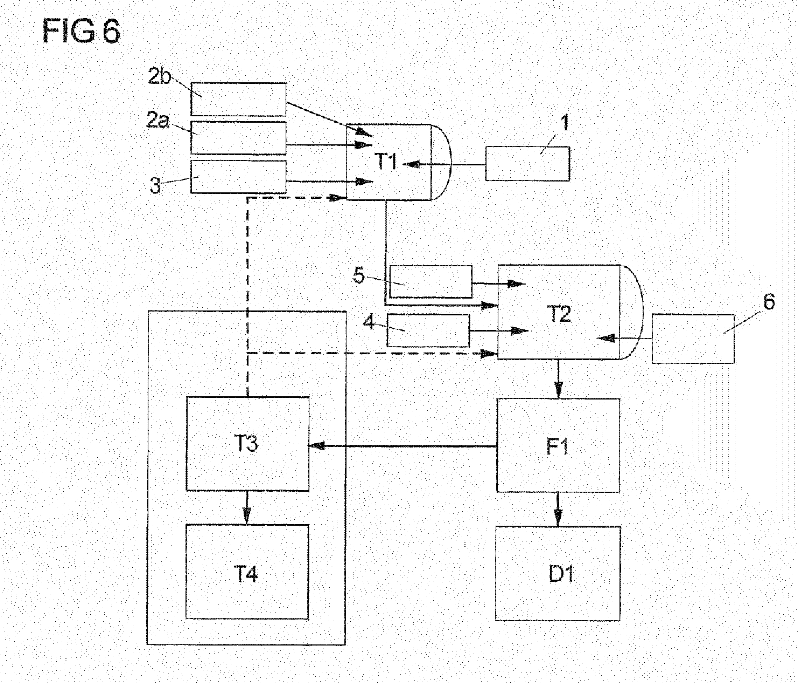

Figure 6 shows yet a further embodiment of the present process, which comprises the additional step c3) of adding an aldehyde 6, such as formaldehyde in respect to the process shown in Figure 4.

In a further embodiment, which is basically identical to the first embodiment of figure 1, the amount of aldehyde added to the suspension of protonated first amino compound, non-protonated second amino compound and layered inorganic particles is increased.

By increasing the amount of aldehyde added to the suspension of inorganic particles intercalated with amino compounds, in particular the formaldehyde amount, an improved particle formation is possible. Furthermore, the filtration time can be shortened as well as the drying step which usually depends on the water retention value of the modified inorganic particles.

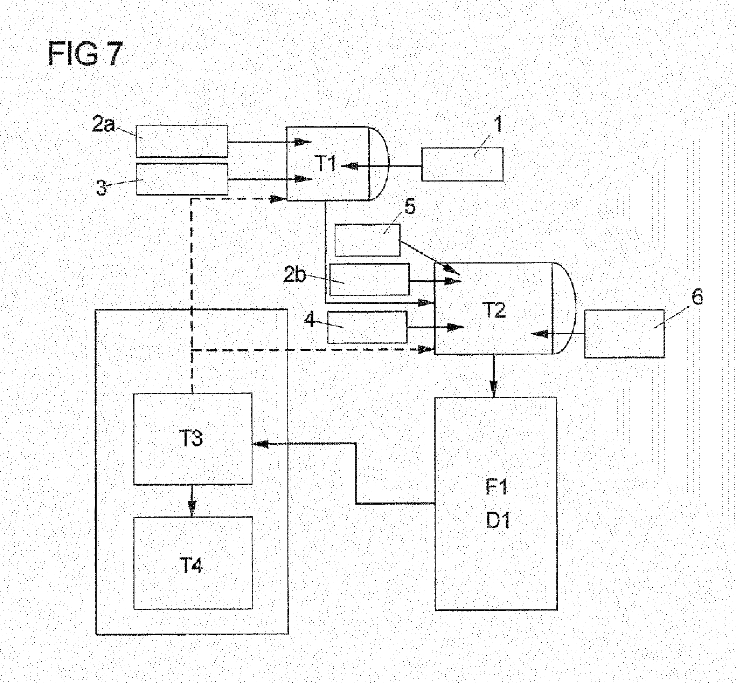

Figure 7 shows another embodiment of the present process. The process scheme is basically identical to the previously described embodiment of figure 5 so that reference can be made to the previous description.

In addition to the embodiment shown in figure 5 the filtration unit F1 and drying unit D1 are combined. This allows for a reduction in work up time and conditioning of the modified inorganic particles. Hereby, the suspension is directly dried with a Turbo rotor system.

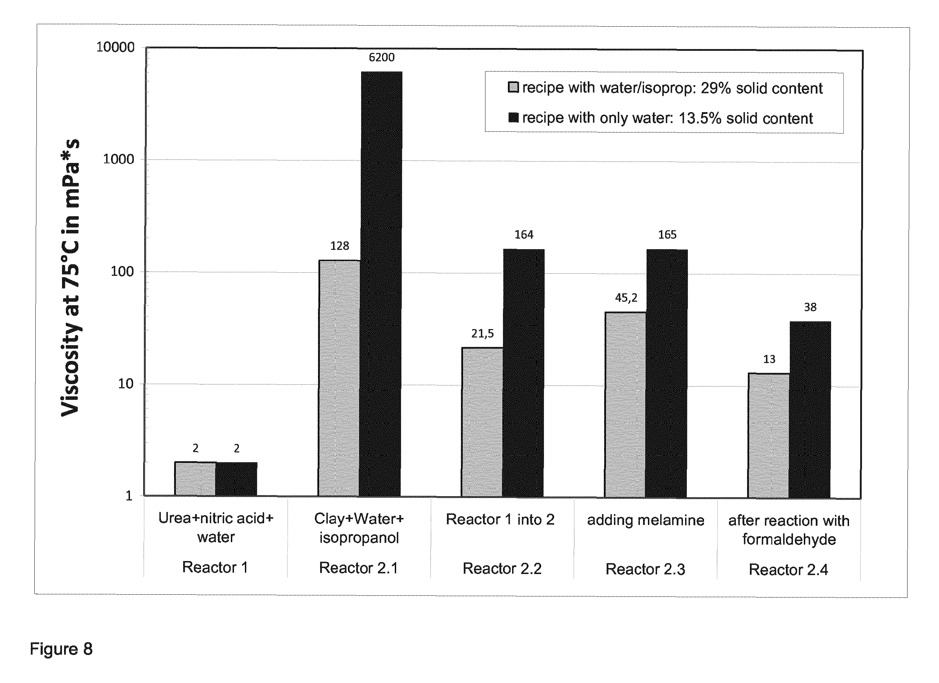

Figure 8 shows a block diagram comparing the viscosity course of the present process and a process using solely water for suspending the inorganic particles in vessel T2.

In a first set (black bars) urea as preferred first amino compound and nitric acid as preferred acid were mixed in the first vessel or reactor T1. Independently, clay was added alongside with water to the second vessel or reactor T2 in order to obtain an aqueous suspension of finally modified inorganic particles with a solid content of 13.5 wt%. The viscosity of this aqueous suspension reaches a maximum value of 6200 mPas/75°C. Subsequently, the protonated urea of vessel T1 is added to the aqueous inorganic particle suspension in vessel T2. The mixture of protonated urea and swollen inorganic particles has a viscosity of about 164 mPas/75°C which basically does not change after addition of melamine as second non-protonated amino compound to vessel T2. Finally formaldehyde is added to the mixture in vessel T2 and the synthesis of the modified inorganic particles is completed. The final product mixture has a viscosity of about 38 mPas/75°C.

In the second set (gray bars) urea and nitric acid were also mixed in the first vessel or reactor T1. In contrast to the above setting clay was added alongside with water/isopropanol mixture to the second vessel T2 in order to obtain a suspension of finally modified inorganic particles in a water/isopropanol mixture with a solid content of 29 wt%. The viscosity of this water/isopropanol suspension reaches a maximum value of solely 128 mPas/75°C. Subsequently, the protonated urea of vessel T1 is added to the water/isopropanol inorganic particle suspension in vessel T2. The mixture of protonated urea and swollen inorganic particles has in this case a viscosity of about 22 mPas/75°C which changes only slightly to 45 mPas/75°C when adding melamine as second non-protonated amino compound to vessel T2. Finally formaldehyde is added to the mixture in vessel T2 and the synthesis of the modified inorganic particles is completed. The final product mixture has a viscosity of about 13 mPas/75°C.

When comparing the viscosity change of the present process with the conventional process using solely water for suspending the inorganic particles it is obvious that the viscosity increase is drastically reduced when using a water/isopropanol mixture for suspending the inorganic particles.

### Comparative example 1

**Mixture 1:** In a 2.5-I flask with 1380g deionized water, 120g Ceratofix XXMG are added stepwise and heated to 80°C. After achieving the temperature the slurry is stirred for 30min at 1100 rpm. The viscosity is approximately 6200 mPas/75°C with a solid content of inorganic particles of ~8 mass-%. The pH value is at 10.

**Mixture 2:** In a second 1-I-flask 500g deionized water are heated to 50 °C. Now, 19.4g urea is added stepwise. While heating to 80°C 31.3 g nitric acid (65%) is slowly added and subsequently stirred for 30 min at 1100 rpm. The formed salt is completely soluble and the solution has a pH value of 0.4.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPas/75°C, 120g of melamine are added and stirred for additional 30 min. During the next 60 min 58.7 g of formalin (36,5%) are added under strong agitating (1100 rpm). This mixture is stirred for 2 h for final condensation to form particles. The final solid content of modified inorganic particles is ~14 mass-%

The mixture is now filtered and the wet product pre-dried at air and then at 70°C for at least 24h up to a moisture content of 3.5 mass-% (determined at a sample of 3g after 2h drying at 103°C). The final product is grinded with a lab mill. 237 g of product is isolated, which is a yield of 78%. The ash content after 2h at 720°C is 35.5 mass-%. The pH value of a 10% suspension in water is 5.1 at 25°C.

### Example 2

**Mixture 1:** In a 2.5-I flask with 280g deionized water and 680g isopropanol, 120g Ceratofix XXMG are added stepwise and heated to 80°C. After achieving the temperature the slurry is stirred for 30min at 1100 rpm. The viscosity is approximately 130 mPas/75°C with a solid content of inorganic particles of ~11 mass-%. The pH value is at 10.

**Mixture 2:** In a second 1-I-flask 200g deionized water are heated to 50°C. Now, 19.4g urea is added stepwise. While heating to 80°C 31.3 g nitric acid (65%) is slowly added and subsequently stirred for 30 min at 1100 rpm. The formed salt is completely soluble and the solution has a pH value of 0.4.

Now the hot Mixture 2 is stepwise added to the Mixture 1 in a way, that the viscosity stays at the same level as Mixture 1 had before. During the ion exchange in the silicate the viscosity drops down. After viscosity reduction lower than 23 mPas/75°C, 120g of melamine are added and stirred for additional 30 min. During the next 60 min 58.7 g of 36.5% formalin solution are added under strong agitating (1100 rpm). This mixture is stirred for 2 h for final condensation to form particles. The final solid content of modified inorganic particles is ~20 mass-%.

The mixture is now filtered and the wet product pre-dried at air and then at 70°C for at least 24h up to a moisture content of 1.2 mass-% (determined at a sample of 3g after 2h drying at 103°C). The final product is grinded with a lab mill. 245 g of product is isolated, which is a yield of 80%. The ash content after 2h at 720°C is 35.5 mass-%. The pH value of a 10% suspension in water is 5.2 at 25°C.

### Example 3

**Mixture 1:** In a 2.5-I flask with 280g deionized water and 680g isopropanol, 120g Ceratofix XXMG are added stepwise and heated to 80°C. After achieving the temperature the slurry is stirred for 30min at 1100 rpm. The viscosity is approximately 126 mPas/75°C with a solid content of inorganic particles of ~11 mass-%. The pH value is at 10.

**Mixture 2:** In a second 1-I-flask 50ml deionized water and 150g isopropanol are heated to 50°C. Now, 19.4g urea is added stepwise. While heating to 80°C 31.3 g nitric acid (65%) is slowly added and subsequently stirred for 30 min at 1100 rpm. The formed salt is completely soluble and the solution has a pH value of 0.4.

Now the hot Mixture 2 is stepwise added to the Mixture 1 in a way, that the viscosity stays at the same level as Mixture 1 had before. During the ion exchange in the silicate the viscosity drops down. After viscosity reduction lower than 25 mPas/75°C, 120g of melamine are added and stirred for additional 30 min. During the next 60 min 58.7 g of 36.5% formalin solution are added under strong agitating (1100 rpm). This mixture is stirred for 2 h for final condensation to form particles. The final solid content of modified inorganic particles is ~20 mass-%

The mixture is now filtered and the wet product pre-dried at air and then at 70°C for at least 24h up to a moisture content of 1.1 mass-% (determined at a sample of 3g after 2h drying at 103°C). The final product is grinded with a lab mill. 245 g of product is isolated, which is a yield of 80%. The ash content after 2h at 720°C is 35.5 mass-%. The pH value of a 10% suspension in water is 5.2 at 25°C.

### Example 4

**Mixture 1:** In a 2.5-I flask with 96g deionized water and 864g isopropanol, 120g Ceratofix XXMG are added stepwise and heated to 80°C. After achieving the temperature the slurry is stirred for 30min at 1100 rpm. The viscosity is approximately 120 mPas/75°C with a solid content of inorganic particles of ~11 mass-%. The pH value is at 10 .

**Mixture 2:** In a second 1-I-flask 200ml deionized water are heated to 50°C. Now, 41.3g melamine is added stepwise. While heating to 80°C 31.3 g nitric acid (65%) is slowly added and subsequently stirred for 30 min at 1100 rpm. The formed salt is suspension and has a pH value of 3.2.

Now the hot Mixture 2 is stepwise added to the Mixture 1 in a way, that the viscosity stays at the same level as Mixture 1 had before. During the ion exchange in the silicate the viscosity drops down. After viscosity reduction lower than 45 mPas/75°C, 120g of melamine are added and stirred for additional 30 min. During the next 60 min 58.7 g of 36.5% formalin solution are added under strong agitating (1100 rpm). This mixture is stirred for 2 h for final condensation to form particles. The final solid content of modified inorganic particles is ~20 mass-%

The mixture is now filtered and the wet product pre-dried at air and then at 70°C for at least 24h up to a moisture content of 1.6 mass-% (determined at a sample of 3g after 2h drying at 103°C). The final product is grinded with a lab mill. 252 g of product is isolated, which is a yield of 82%. The ash content after 2h at 720°C is 35.5 mass-%. The pH value of a 10% suspension in water is 5.7 at 25°C.

### Example 5

**Mixture 1:** In a 2-I flask with 100g deionized water and 400g isopropanol, 120g Ceratofix XXMG are added stepwise and heated to 80°C. After achieving the temperature the slurry is stirred for 30min at 1100 rpm. The viscosity is approximately 240 mPas/75°C with a solid content of inorganic particles of ~19 mass-%. The pH value is at 10

**Mixture 2:** In a second 1-I-flask 200g deionized water are heated to 50 °C. Now, 19.4g urea is added stepwise. While heating to 80°C 31.3 g nitric acid (65%) is slowly added and subsequently stirred for 30 min at 1100 rpm. The formed salt is completely soluble and the solution has a pH value of 0.4.

Now the hot Mixture 2 is stepwise added to the Mixture 1 in a way, that the viscosity stays at the same level as Mixture 1 had before. During the ion exchange in the silicate the viscosity drops down. After viscosity reduction lower than 93 mPas/75°C, 120g of melamine are added and stirred for additional 30 min. During the next 60 min 58.7 g of 36.5% formalin solution are added under strong agitating (1100 rpm). This mixture is stirred for 2 h for final condensation to form particles. The final solid content of modified inorganic particles is ~29 mass-%

The mixture is now filtered and the wet product pre-dried at air and then at 70°C for at least 24h up to a moisture content of 1.2 mass-% (determined at a sample of 3g after 2h drying at 103°C). The final product is grinded with a lab mill. 254 g of product is isolated, which is a yield of 83%. The ash content after 2h at 720°C is 38 mass-%. The pH value of a 10% suspension in water is 5.3 at 25°C.

### Example 6

**Mixture 1:** In a 2-I flask with 20g deionized water and 150g isopropanol, 120g Ceratofix XXMG are added stepwise and heated to 80°C. After achieving the temperature the slurry is stirred for 30min at 1100 rpm. The viscosity is approximately 1250 mPas/75°C with a solid content of inorganic particles of ~41 mass-%. The pH value is at 10

**Mixture 2:** In a second 1-I-flask 50g deionized water are heated to 50°C. Now, 19.4g urea is added stepwise. While heating to 80°C 31.3 g nitric acid (65%) is slowly added and subsequently stirred for 30 min at 1100 rpm. The formed salt is completely soluble and the solution has a pH value of 0.4.

Now the hot Mixture 2 is stepwise added to the Mixture 1 in a way, that the viscosity stays at the same level as Mixture 1 had before. During the ion exchange in the silicate the viscosity drops down. After viscosity reduction lower than 190 mPas/75°C, 120g of melamine are added and stirred for additional 30 min. During the next 60 min 58.7 g of 36.5% formalin solution are added under strong agitating (1100 rpm). This mixture is stirred for 2 h for final condensation to form particles. The final solid content of modified inorganic particles is ~48 mass-%

The mixture is now filtered and the wet product pre-dried at air and then at 70°C for at least 24h up to a moisture content of 1.5 mass-% (determined at a sample of 3g after 2h drying at 103°C). The final product is grinded with a lab mill. 270 g of product is isolated, which is a yield of 88%. The ash content after 2h at 720°C is 41 mass-%. The pH value of a 10% suspension in water is 5.6 at 25°C.

### Example 7

**Mixture 1:** In a 2-I flask with 300g isopropanol, 120g Ceratofix XXMG are added stepwise and heated to 80°C. After achieving the temperature the slurry is stirred for 30min at 1100 rpm. The viscosity is approximately 385 mPas/75°C with a solid content of inorganic particles of ~29 mass-%. The pH value is at 10,5 .

**Mixture 2:** In a second 1-I-flask 50g isopropanol are heated to 50°C. Now, 19.4g urea is added stepwise. While heating to 80°C 31.3 g nitric acid (65%) is slowly added and subsequently stirred for 30 min at 1100 rpm. The formed suspension has a pH value of 0.4. Now the hot Mixture 2 is stepwise added to the Mixture 1 in a way, that the viscosity stays at the same level as Mixture 1 had before. During the ion exchange in the silicate the viscosity drops down. After viscosity reduction lower than 60 mPas/75°C, 120g of melamine are added and stirred for additional 30 min. During the next 60 min 21.4 g of para-formaldehyde are added under strong agitating (1100 rpm). This mixture is stirred for 2 h for final condensation to form particles. The final solid content of modified inorganic particles is ~ 40 mass-%

The mixture is now filtered and the wet product pre-dried at air and then at 70°C for at least 24h up to a moisture content of 1.5 mass-% (determined at a sample of 3g after 2h drying at 103°C). The final product is grinded with a lab mill. 273 g of product is isolated, which is a yield of 89%. The ash content after 2h at 720°C is 41 mass-%. The pH value of a 10% suspension in water is 5.6 at 25°C.

### Example 8

**Mixture 1:** In a 2-I flask with 300g isopropanol, 120g Ceratofix XXMG are added stepwise and heated to 80°C. After achieving the temperature the slurry is stirred for 30min at 1100 rpm. The viscosity is approximately 385 mPas/75°C with a solid content of inorganic particles of ~29 mass-%. The pH value is at 10,5 .

**Mixture 2:** In a second 1-I-flask 50g isopropanol are heated to 50°C. Now, 19.4g urea is added stepwise. While heating to 80°C 31.3 g nitric acid (65%) is slowly added and subsequently stirred for 30 min at 1100 rpm. The formed suspension has a pH value of 0.4.

Now the hot Mixture 2 is stepwise added to the Mixture 1 in a way, that the viscosity stays at the same level as Mixture 1 had before. During the ion exchange in the silicate the viscosity drops down. After viscosity reduction lower than 60 mPas/75°C, 120g of melamine are added and stirred for additional 30 min. During the next 60 min 31.4 g of acetaldehyde are added under strong agitating (1100 rpm). This mixture is stirred for 2 h for final condensation to form particles. The final solid content of modified inorganic particles is ~40 mass-%

The mixture is now filtered and the wet product pre-dried at air and then at 70°C for at least 24h up to a moisture content of 1.5 mass-% (determined at a sample of 3g after 2h drying at 103°C). The final product is grinded with a lab mill. 273 g of product is isolated, which is a yield of 85%. The ash content after 2h at 720°C is 39 mass-%. The pH value of a 10% suspension in water is 5.3 at 25°C.

### Example 9

**Mixture 1:** In a 2-I flask with 100g deionized water and 400g isopropanol, 120g Ceratofix XXMG are added stepwise and heated to 80°C. After achieving the temperature the slurry is stirred for 30min at 1100 rpm. The viscosity is approximately 240 mPas/75°C with a solid content of inorganic particles of ~19 mass-%. The pH value is at 10,5.

**Mixture 2:** In a second 1-I-flask 200g deionized water are heated to 50°C. Now, 19.4g urea is added stepwise. While heating to 80°C 31.3 g nitric acid (65%) is slowly added and subsequently stirred for 30 min at 1100 rpm. The formed salt is completely soluble and the solution has a pH value of 0.4.

Now the hot Mixture 2 is stepwise added to the Mixture 1 in a way, that the viscosity stays at the same level as Mixture 1 had before. During the ion exchange in the silicate the viscosity drops down. After viscosity reduction lower than 137 mPas/75°C, 120g of melamine are added and stirred for additional 120 min. The final solid content of modified inorganic particles is ~29 mass-%

The mixture is now filtered and the wet product pre-dried at air and then at 70°C for at least 24h up to a moisture content of 1.2 mass-% (determined at a sample of 3g after 2h drying at 103°C). The final product is grinded with a lab mill. 242 g of product is isolated, which is a yield of 79%. The ash content after 2h at 720°C is 37 mass-%. The pH value of a 10% suspension in water is 5.8 at 25°C.

### Example 10

**Mixture 1:** In a 2.5-I flask with 96g deionized water and 864g isopropanol, 120g Ceratofix XXMG are added stepwise and heated to 80°C. After achieving the temperature the slurry is stirred for 30min at 1100 rpm. The viscosity is approximately 120 mPas/75°C with a solid content of inorganic particles of ~11 mass-%. The pH value is at 10,5 .

**Mixture 2:** In a second 1-I-flask 200ml deionized water are heated to 50°C. Now, 161.3g melamine is added stepwise. While heating to 80°C 31.3 g nitric acid (65%) is slowly added and subsequently stirred for 30 min at 1100 rpm. The formed salt is a suspension and has a pH value of 5.2.

Now the hot Mixture 2 is stepwise added to the Mixture 1 in a way, that the viscosity stays at the same level as Mixture 1 had before. During the ion exchange in the silicate the viscosity drops down. During the next 60 min 58.7 g of 36.5% formalin solution are added under strong agitating (1100 rpm). This mixture is stirred for 2 h for final condensation to form particles. The final solid content of modified inorganic particles is ~20 mass-%

The mixture is now filtered and the wet product pre-dried at air and then at 70°C for at least 24h up to a moisture content of 1.5 mass-% (determined at a sample of 3g after 2h drying at 103°C). The final product is grinded with a lab mill. 250 g of product is isolated, which is a yield of 82%. The ash content after 2h at 720°C is 38 mass-%. The pH value of a 10% suspension in water is 5.7 at 25°C.

### Example 11

**Mixture 1:** In a 2.5-I flask with 48g deionized water and 432g isopropanol, 120g Ceratofix XXMG are added stepwise and heated to 80°C. After achieving the temperature the slurry is stirred for 30min at 1100 rpm. The viscosity is approximately 180 mPas/75°C with a solid content of inorganic particles of ~20 mass-%. The pH value is at 10,5

**Mixture 2:** In a second 1-I-flask 100ml deionized water are heated to 50°C. Now, 41.3g melamine is added stepwise. While heating to 80°C 31.3 g nitric acid (65%) is slowly added and subsequently stirred for 30 min at 1100 rpm. The formed salt is suspension and has a pH value of 6.4.

Now the hot Mixture 2 is stepwise added to the Mixture 1 in a way, that the viscosity stays at the same level as Mixture 1 had before. During the ion exchange in the silicate the viscosity drops down. During the next 60 min 10.8 g of 36.5% formalin solution (related to the exchange capacity of the silicate of 1:1) are added under strong agitating (1100 rpm). This mixture is stirred for 2 h for final condensation to form particles. The final solid content of modified inorganic particles is ~25 mass-%

The mixture is now filtered and the wet product pre-dried at air and then at 70°C for at least 24h up to a moisture content of 1.5 mass-% (determined at a sample of 3g after 2h drying at 103°C). The final product is grinded with a lab mill. 198 g of product is isolated, which is a yield of 96%. The ash content after 2h at 720°C is 48 mass-%. The pH value of a 10% suspension in water is 4.8 at 25°C.

### Example 12

Commercially available urea-formaldehyde-(UF) glues with a formaldehyde: urea ratio of ≤ 1.12 are considered. The composition of a glue for production of particle boards e. g. additives, hydrophobic agent, curing agent etc. remains, comparing to industrial compositions, standard as well as dilution of the glue paste with water to 50 %. The modified inorganic particles according to the invention are added as aldehyde scavenger to the glue simultaneously with the other additives. The curing agent is added to the glue paste prior to spraying of the glue paste on the wood chips. The amount of scavenger is calculated in % of solid material on solids of glue which is app. 69 %.

Considering this approach, 18,2 g of a modified inorganic particle (obtained according to Examples 1 to 11 with moisture below 1 %), i.e. 6 % regarding the total solid content of the glue, is dispersed in 100.7 g water. 434,8 g of urea-formaldehyde glue, 25.0 g of hydrophobic agent in a 60 % emulsion (this corresponds to 0.5 wt% of hydrophobic agent regarding the total mass of the particle board) are mixed and homogenised with the modified inorganic particles. 6.0 g ammonium nitrate in a 50 % solution (this corresponds to 1.0 wt% of hardener regarding the total solid content of a glue) as curing agent is added.

3061 g of wood chips (core chips, max length app. 3 cm, moisture lower than 4%) are mixed in a rotating drum. With the help of a pump injection 584.7 g of the glue paste is sprayed on the wood chips. 1.4 kg of the so prepared wood chips are put in a wooden form of 460 x 440 mm and pressed to a single layer particle board (PB) with 10 mm thickness and a density of 700 kg/m³. Pressing temperature is 200°C and pressing time is 80 sec. Formaldehyde release from PB is further on determined according to the EN 717-3 Flask method. From manufactured PB test pieces of 25 mm x 25 mm are cut for determination of flask value, 12 test pieces are taken for determination of the moisture content. The formaldehyde release from the boards with the different Examples (No.1 to 11) is shown below in Table 1.

### Comparative example 12.1

492.5 g of urea-formaldehyde glue, 27.5 g of hydrophobic agent emulsion, 58.7 g of water and 6.06 g ammonium nitrate as curing agent are mixed together and homogenised; no modified inorganic particle were added.

Using this glue paste the wood chips were glued and a particle board was pressed under the same conditions as in Example 10.

**Table 1: Viscosity in T2, Gel times and FA release from PB for Examples 2 - 11 and comparative examples 1 and 12.1**

| Modified inorganic particle | Viscosity in T2, 75° C [mPas] | Gel time of activated glue at 100°C[s] | Formaldehyde release from particle board [ppm] |
|---|---|---|---|
| **Example 1** | **6200** | **246** | **6.3** |
| Example 2 | 130 | 256 | 6.4 |
| Example 3 | 126 | 252 | 7.2 |
| Example 4 | 120 | 275 | 7.8 |
| Example 5 | 240 | 266 | 7.7 |
| Example 6 | 1250 | 254 | 6,9 |
| Example 7 | 385 | 270 | 7.4 |
| Example 8 | 385 | 283 | 7.6 |
| Example 9 | 240 | 320 | 7.2 |
| Example 10 | 120 | 302 | 7.6 |
| Example 11 | 180 | 262 | 8.0 |
| **Example 12.** 1 | | **257** | **22** |

### General procedure for viscosity measurements:

200 ml sample is taken out of the reactor. While the sample is tempered in a water bath at 75° C, the viscosity is measured by Brookfield viscosimeter DV-II Pro with spindles S 61 or 62 depending on viscosity level until constant value is achieved (approximately 10 s to 30 s). Afterwards, the sample is returned to the reactor.

## Claims

1. Process for obtaining modified inorganic particles having a layered structure,
**characterized by** the steps of
a1) Providing an organic and/or aqueous solution or suspension comprising at least one first amino compound in a first vessel T1 and protonating the at least one first amino compound by using at least one acid;
b) Providing a homogenous suspension comprising at least one inorganic particle having a layered structure in at least one organic solvent or a mixture of water and at least one organic solvent in a second vessel T2;
c1) addition of the organic and/or aqueous solution or suspension of the at least one first protonated amino compound from the first vessel T1 to the homogenous suspension comprising at least one inorganic particle having a layered structure in the second vessel T2;
d) removal and work up of the modified inorganic particles.

2. Process according to claim 1, **characterized in that** in an additional step c3) at least one aldehyde is added to the homogenous suspension of the at least one inorganic particle and the first protonated amino compound in the second vessel T2 obtained in step c1).

3. Process according to claim 1 or 2, **characterized in that** at least one second non-protonated amino compound is added to the suspension obtained in step c1) in an additional step c2).

4. Process according to claim 1 or 2, **characterized in that,** at least one second non-protonated amino compound is added to the solution or suspension obtained in step a1) in the first vessel T1 in an additional step a2); and that the aqueous solution or suspension from the first vessel T1 comprising the first protonated amino compound and the second non-protonated compound obtained in step a2) is added to the homogeneous suspension comprising at least one inorganic particle having a layered structure in the second vessel T2 in step c1).

5. Process according to one of the preceding claims, **characterized in that,** the organic solvent used in step a1) or b) is selected from a group of organic solvents, which are water miscible or not water-miscible.

6. Process according to one of the preceding claims, **characterized in that,** the at least one organic solvent used in step a1) or b) is selected from a group of organic solvents comprising lower alkanols, preferably C1-C6 alkanols, in particular preferably C2-C5 alkanols such as ethanol, n-propanol or iso-propanol, diols and oligools such as glycol, diethylenglycol, glycerol; ethers such as THF, dioxane, ketons such as acetone, and DMF, DMSO.

7. Process according to one of the preceding claims, **characterized in that** when using a water/organic solvent mixture the amount of the at least one organic solvent used in the water-solvent mixture of step b) is in a range between 50 and 99 wt%, preferably between 65 and 95 wt%, in particular preferably between 75 and 85 wt%.

8. Process according to one of the preceding claims, **characterized in that** the solid content of modified inorganic particles in reactor T2 in step b) before work up is between 20 and 90 wt%, preferably between 20 and 80 wt%, in particular preferably between 20 and 70 wt%.

9. Process according to one of the preceding claims, **characterized in that** the viscosity of the suspension of inorganic particles having a layered structure in the second vessel T2 obtained in step b) is between 50 and 3000 mPas/75°C, preferably between 50 an 2500 mPas/75°C, most preferably between 50 and 2000mPas/75°C.

10. Process according to one of the preceding claims, **characterized in that** the inorganic particles having a layer structure are selected from a groups comprising silicates, phosphates, arsenates, titanates, vanadates, niobates, molybdates and/or manganates, in particular sheet silicates of the type consisting of montmorillonite, bentonite, kaolinite, muscovite, hectorite, fluorohectorite, canemite, revdite, grumantite, ilerite, saponite, beidelite, nontronite, stevensite, laponite, taneolite, vermiculite, halloysite, volkonskoite, magadite, rectorite, halloysite, kenyaite, sauconite, borofluorophlogopites and/or synthetic sheet silicates, the sheet silicates furthermore particularly preferably being sheet silicates having exchangeable cations of the type consisting of alkali metal, alkaline earth metal, aluminum, iron and/or manganese cations.

11. Process according to one of the preceding claims, **characterized in that** the modified inorganic particles are filtered and dried, preferably in a combined filtration drying step, after removal from the reaction mixture in step d), wherein preferably a washing step is omitted, and that the supernatant/waste solvent obtained during filtration in step d) is transferred to a third vessel T3 and optionally to a fourth vessel T4 for waste workup.

12. Modified inorganic particles having a layered structure obtainable in a process according to claim 1 comprising the steps a1), b), c1) and d) comprising
- at least one protonated first amino compound,
- at least one salt comprising native cations of the layered inorganic particles and anions of the acid used in step a1) for protonating the first amino compound; and
- a salt comprising protonated first amino compound as cation and anions of the acid used in step a1) for protonating the first amino compound.

13. Modified inorganic particles having a layered structure obtainable in a process according to claim 2 comprising the steps a1), b), c1), c3) and d) comprising
- at least one protonated first amino compound,
- at least one salt comprising native cations of the layered inorganic particles and anions of the acid used in step a1) for protonating the first amino compound,
- at least one salt comprising protonated first amino compound as cation and anions of the acid used in step a1) for protonating the first amino compound; and
- a thin polymer coat of an amino-aldehyde-condensate formed by the first protonated amino compound and an aldehyde.

14. Modified inorganic particles having a layered structure obtainable in a process according to claims 1, 3 and 4 comprising the steps a1), b), c1) c2) d) or a1), a2), c1), d) comprising
- at least one protonated first amino compound,
- at least one salt comprising native cations of the layered inorganic particles and anions of the acid used in step a1) for protonating the first amino compound,
- at least one salt comprising protonated first amino compound as cation and anions of the acid used in step a1) for protonating the first amino compound; and
- intercalated non-protonated second amino compound.

15. Use of the modified inorganic particles according to one of the claims 12 to 14 as aldehyde scavenger, as curing agent for different glues, in particular aminoplast-formaldehyde-glues like urea-formaldehyde, melamine-formaldehyde or melamine-urea-formaldehyde glues as modifier for wood based panels and as additives for thermoplastic or thermoset compounds, in particular polyolefines, for improving their general properties.
